# EUROPEAN PATENT SPECIFICATION

(11) **EP 2 043 359 B1**
(45) Date of publication and mention of the grant of the patent: **27.03.2013**
(21) Application number: 08165139.0
(22) Date of filing: 25.09.2008
(51) Int. Cl.: H04N 1/40, H04N 5/232

(54) **System and method for image processing**
System und Verfahren zur Bildverarbeitung
Système et procédé de traitement d'images

(30) Priority: 26.09.2007 US 861970
(43) Date of publication of application: 01.04.2009
(73) Proprietor: Honeywell International Inc., Morristown, NJ 07962 (US)
(72) Inventor: Wilson, Jeremy, Delta British Columbia V4E 2M3 (CA)
(74) Representative: Houghton, Mark Phillip

(56) References cited:
- EP-A- 1 296 510
- EP-A- 1 467 552
- US-A1- 2004 258 308

## Description

The present invention generally relates to a system and method for image processing, such as image stabilization. More particularly, this invention relates to a system and method for stabilizing images and recording adjustments made to images during the course of image stabilization.

Image stabilization is the process of adjusting an image or video stream to correct image defects caused by camera shake. Image stabilization minimizes or prevents an image or video steam from becoming blurred due to camera shake. During the course of image stabilization, an image can be adjusted to compensate the image defects that result from camera shake. For example, the adjustment could be translation, rotation, zooming, shearing, and so on, more generally referred to in the art as an affine transformation.

However, problems can arise if the type and extent of the adjustment made to the image are not recorded in some fashion. For example, the adjustment process may inadvertently add shake to an image that is actually stable, or attempt to stabilize image motion that is not due to shake but due to an intentional camera motion, in which case it may be desirable to later correct this error to reverse the adjustment for forensic analysis of the image.

As a related example, when a recorded image is used for evidentiary purposes, it may be important to exactly know how the adjustment to the image was made by the system prior to recording. As a further example, shake can cause image blurring, but without an indication that the original image was shaking, the correlation between shake and image blur may not be obvious, so that the wrong approach may be taken to mitigate the blur issue.

Accordingly, there is a need for the image processing system and method to record the adjustment made during the course of image stabilization such that the type and extend of the adjustment can be tracked for subsequent actions, such as forensic analysis.

EP 1 296 510 A2 discloses a system of determining whether an image should be corrected, and if so, using a photofinishing system to apply selected correction processes to the image. EP 1 467 552 A2 discloses a method of providing icons that identify the type of corrections made to an image. US 2004/0 258 308 discloses Techniques for analyzing and adjusting digital images wherein an application analyzes and adjusts image data automatically upon acquiring a digital image based on, for example, image orientation, red-eye detection, blurriness, color balance, exposure, or noise detection.

In view of the foregoing and other problems of the conventional system and method, an object of the present invention is to provide an image processing system and method, which are capable of recording the image adjustment applied during image stabilization and generating an image attachment associated with the image and corresponding to the adjustment.

The present invention is as set out in the appended claims.

The present invention provides an image processing system that comprises an image capturing device for capturing an image and generating image data of the image, an image adjusting device for adjusting the image by processing the image data, and an image adjustment-recording device that records the adjustment of the image implemented by the image adjusting device and generates at least one image attachment to the adjusted image in response to the adjustment.

In one aspect of the system, the image attachment is a visual indicator overlaid on the adjusted image, indicating the type and extent of the image adjustment.

In another aspect of the system, the image attachment is metadata associated with the adjusted image, recording exactly the type and extent of the image adjustment. The metadata can also be utilized to control the analysis of the image adjustment. The system is also capable of optionally rendering a visual indicator by using the information in the metadata.

In yet another aspect of the system, the image attachment comprises both a visual indicator and metadata.

The present invention also provides an image processing method that comprises the steps of capturing an image and generating image data corresponding to the captured image, adjusting the captured image by processing the image data, and recording the adjustment of the image and generating an image attachment associated with the image and corresponding to the adjustment.

In one aspect of the method, a visual indicator overlaid on the adjusted image is generated as the image attachment, indicating the type and extent of the image adjustment.

In another aspect of the method, metadata associated with the adjusted image is generated as the image attachment, recording exactly the type and extent of the image adjustment. The metadata can be utilized to control the analysis of the image adjustment. The method also includes optionally rendering a visual indicator by using the information in the metadata.

These and other features, benefits and advantages of the present invention will become apparent by reference to the following text figures, with like reference numbers referring to like structures across the views, wherein:

FIG. 1 is a functional block diagram of an image processing system according to the present invention;

FIG. 2A-2C are flow charts illustrating an image processing method according to the present invention wherein an image attachment is generated to record the image adjustment, which could be a visual indicator, metadata or both;

FIG. 3a-3c are pictures showing a first embodiment of the visual indicator used by the present invention;

FIG. 4a-4c are pictures showing a second embodiment of the visual indicator used by the present invention; and

FIG. 5a-5c are pictures showing a third embodiment of the visual indicator used by the present invention.

The present invention now will be described in detail hereinafter with reference to the accompanying drawings, in which preferred embodiments of the invention are shown. However, this invention may be embodied in many different forms and should not be construed as limited to the embodiments set forth herein; rather, these embodiments are provided so that this disclosure will be thorough and complete, and will fully convey the scope of the invention to those skilled in the art. Like numerals refer to like elements throughout.

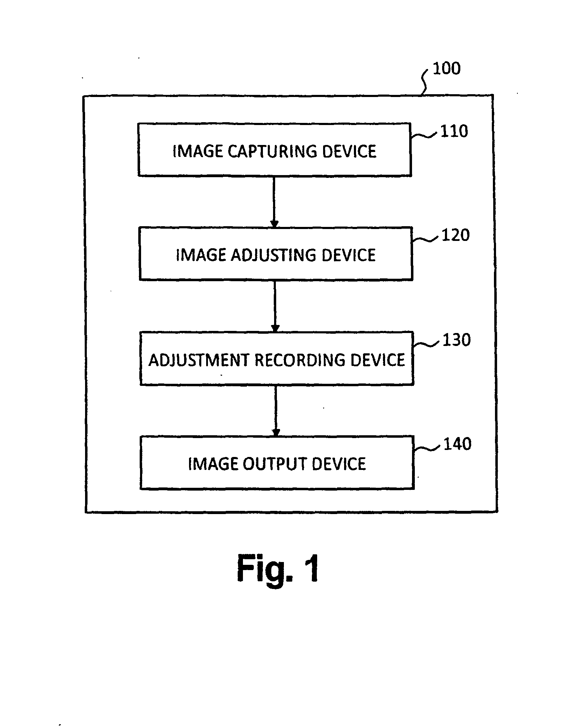

Figure 1 illustrates the image processing system of the present invention, indicated by numeral 100. Image processing system 100 comprises an image capturing device 110, an image adjusting device 120, an image adjustment-recording device 130 and an image output device 140. Image capturing device 110 functions to capture an image of an object of interest and generate image data corresponding to the captured image. The image capturing device can be implemented by a variety of devices known in the art. For example, image capturing device 110 includes video surveillance cameras used in a video surveillance system. Such cameras typically provide analog or digital images via a cable to a secure location where the images are monitored by personnel and/or stored in memory for subsequent viewing and analysis. The image generated by the image capturing device could be a live image in real time, or a stored image in which case the image capturing device further includes an image storing device for storing the image data.

Image adjusting device 120 functions to adjust the image by processing the image data generated by the image capturing device. For example, image adjusting device 120 functions to stabilize the captured image having defects caused by the motion of the image capturing device, especially the shake and jitter of the image capturing device. The Image adjusting device can implement different adjustments to stabilize the captured image, such as translation, rotation and zooming. However, the functionality of the image adjustment device is not limited to image stabilization, but may include image sharpening, noise filtering, contrast enhancement, image color correction and so on. For a video surveillance system, the image adjustment may be applied to both stored video clips and on live video.

Image adjustment-recording device 130 functions to record the adjustment of the image implemented by image adjusting device 120 and generate at least one image attachment associated with the image and corresponding to the adjustment. Image adjustment-recording device 130 utilizes the adjustment the image processing system computes for processing the image to render that adjustment as an image attachment corresponding to the adjustment. The image attachment generated by image adjustment-recording device 130 could be a visual indicator or metadata, associated with the image and corresponding to the adjustment. The metadata could be in the form of an XML (extended Markup Language) text structure associated with the image. This association between a particular image and its associated metadata can be maintained by a variety of methods known in the art. For example, the JFIF file format commonly used to represent JPEG images makes allowance for inclusion of additional metadata within the file. Streaming protocols such as RTSP allow for the establishment of multiple data streams, which in this case allows for an image stream to be transmitted on a separate logical stream from its metadata, but associated with the same streaming session.

As the image adjustment history is recorded and reflected by the image attachment, it is feasible to track the adjustments made to the image by checking the attachment corresponding to the adjustment. This ensures that any adjustments applied to the image are captured in the adjusted image output. The visual indicator and/or metadata make it clear if the image capturing device is steady or shaking, the extent of any shake, and the state of the stabilization processing. For example, in a video surveillance system, the captured images usually need to be processed for a later forensic video analysis. If the image has been accidentally adjusted, the attachment generated by the image adjustment device provides a clear clue of what adjustment has been made and a further adjustment can be implemented to reverse the previous adjustment to provide a desirable image. Image processing system 100 further comprises an image output device 140, which functions to output the adjusted image and the visual indicator overlaid on the adjusted image. In a typical surveillance system, the process of image output includes image storage and/or image viewing in real time. Whether viewed in real time or from storage, the present invention includes the option of rendering the visual indicator based on the adjustment metadata stored along with the image.

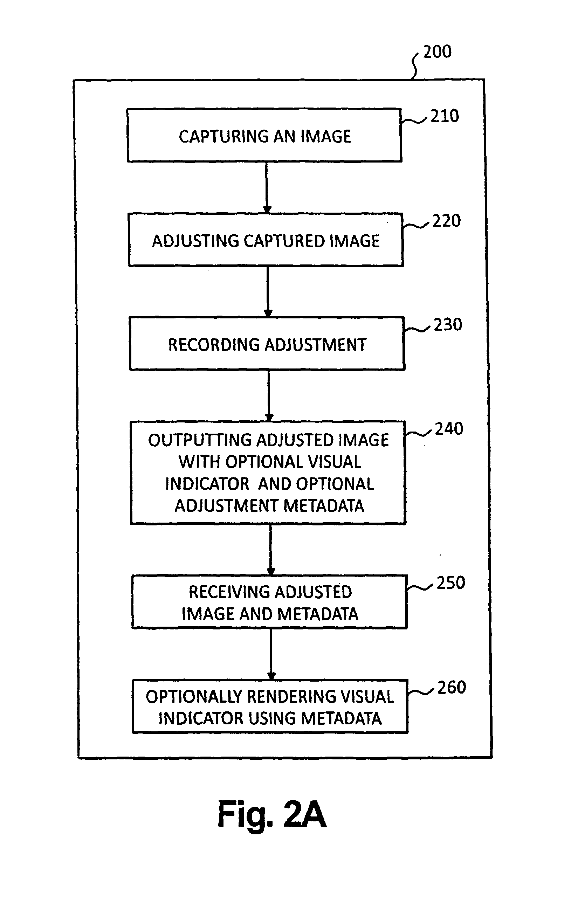

Fig.2A-2C are flow charts illustrating an image processing method according to the present invention wherein an image attachment is generated corresponding to the image adjustment, which could be a visual indicator, metadata or both.

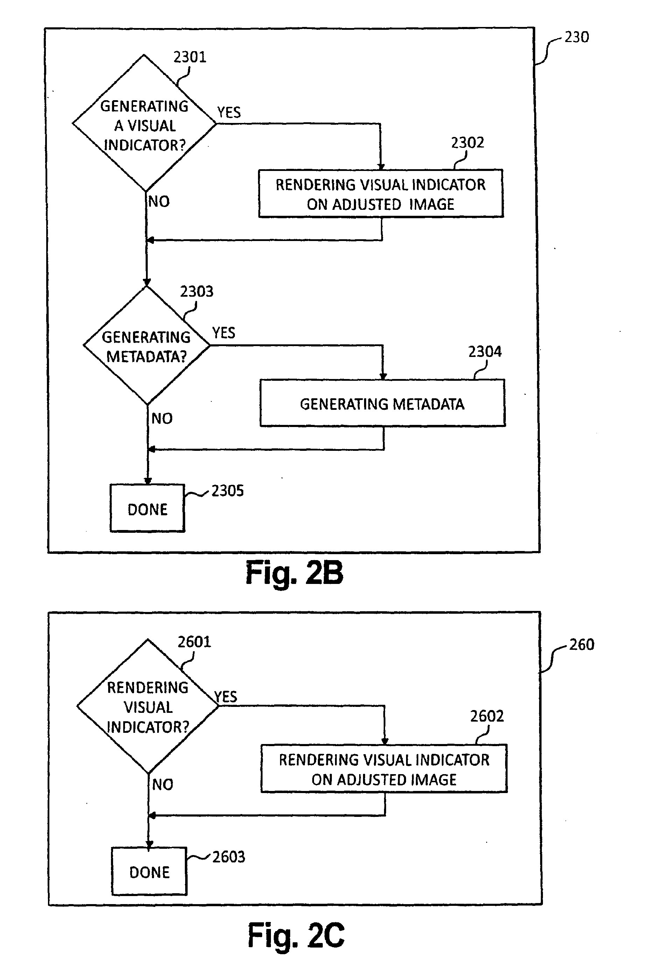

In Fig. 2A showing the main flow, the image processing method is indicated as 200, such as a method used to stabilize an image captured from a surveillance camera. At step 210, an image is captured and image data of the image is generated by image capturing device 110 in Fig. 1. At step 220, the captured image is adjusted by image adjusting device 120, for example, to stabilize the captured image. At step 230, the adjustment made to the image is recorded by image adjustment-recording device 130. Image adjustment-recording device 130 in Fig. 1 implements its function of generating an image attachment associated with the adjusted image and corresponding to the adjustment. Fig. 2B illustrates in detail step 230 in Fig. 2A, in which a visual indicator and/or metadata corresponding to the adjustment are generated to record the adjustment. At step 2301, it is determined whether a visual indicator be generated by image adjustment-recording device 130 according to the current system configuration. If it is determined that a visual indicator be generated to indicate the image adjustment, the method proceeds to step 2302, at which the visual indicator is generated and overlaid on the adjusted image outputted at step 240. The method subsequently proceeds to step 2303, at which it is determined whether metadata be generated by the image adjustment-recording device. If it is determined that metadata be generated, the method proceeds to step 2304, at which metadata is generated.

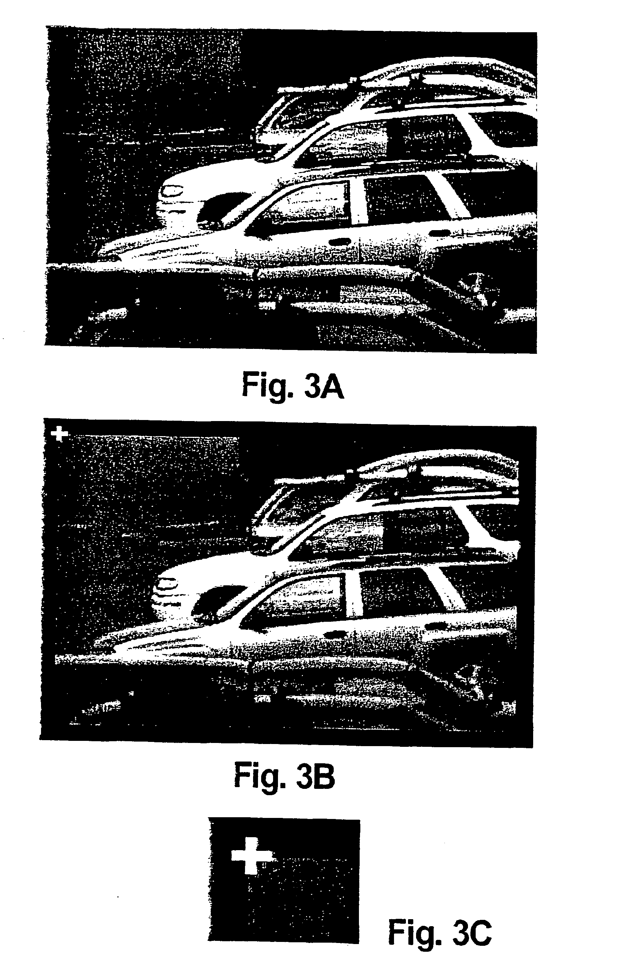

At step 240, the adjusted image is outputted and displayed with the optional visual indicator and metadata by image output device 140 shown in Fig. 1. If a visual indicator is generated corresponding to the adjustment, the information concerning the type and extent of the adjustment can be retrieved by recognizing the visual indicator corresponding to the adjustment. The visual indicator may have various configurations and physical characteristics to reflect the various adjustment of the image. Detailed description of the visual indicator will be made in connection with Figs. 3-5.

If metadata is generated corresponding to the adjustment, the adjusted image and the metadata can be received at step 250 and the metadata can be utilized to optionally render a visual indicator at step 260. The outputted metadata can further be utilized to analyze the image adjustment or to control other functionalities of the image processing system.

Fig. 2C illustrates in detail the step 260, at which the metadata generated corresponding to the image adjustment is utilized to optionally render a visual indicator. At step 2601, it is determined whether a visual indicator be rendered by the metadata. If so, the method proceeds to step 2602, at which a visual indicator is rendered by using the information of the metadata and overlaid on the adjusted image.

This metadata approach supports flexible display options for optionally rendering a visual indictor by using the metadata. When the visual indicator is not required or when the visual indicator obscures part of the image that needs to be examined, the visual indicator can be disabled. This metadata approach also simplifies automated analysis of the adjustment information, for example, to automatically render a portion of an image in its unadjusted state. Further, the metadata approach also has the advantage of not being subject to artifacts that can be introduced by compression of a visual indicator.

Figs. 3-5 illustrate different embodiments of the visual indicator overlaid on the output image to display the type and/or extent of the image adjustment. In these embodiments, the image processing system stabilizes the captured image to correct image defects caused by the shake of a surveillance camera.

For example, the adjustment applied in the image stabilization process is a translation of the image horizontally and vertically to within 1/8^{th} of a pixel. The visual indicator is, for example, a crosshair disposed close to the upper left corner of the adjusted image, as shown in Figs.3c, 4c, and 5c. The crosshair indicates the extent of translation to the nearest pixel (e.g. a translation of less than ½ a pixel is rounded down to 0, while a translation of ½ a pixel is rounded up to 1). The image can be substantially restored to its unadjusted position by translating the image back so that the crosshair returns to its nominal position. Further, the visual indicator may have different physical characteristics to reflect the type, extent or any other properties of the adjustments during the image stabilization. For example, the visual indicator has different colors and shapes to display basic stabilization state information. The color green may be used to indicate no adjustment was made in either direction, and serves also to highlight the nominal position of the crosshair. The color yellow may be used to indicate that an adjustment was made. The color red may be used to indicate that the stabilization processing was unable to determine the degree of the translation to apply, because, for example, the image was too blurry or the field of view of the camera was changing, in which case no adjustment is made. Typical image stabilization processing applies adjustments to within a fraction of a pixel, therefore as a further refinement, the visual indicator can include an additional scale for each adjustment axis to indicate the extent of sub-pixel adjustment.

Figs. 3a-3c illustrate a first embodiment of the visual indicator. The original image, which is unadjusted, is shown in Fig. 3a. The adjusted image is shown in Fig. 3b, in which a visual indicator is shown at the upper left corner of the figure. In Fig. 3b, the fixed black border around the adjusted image is used to avoid the visually distracting effect of a changing border due to shake. Fig.3c is an enlarged view of the upper left corner of Fig. 3b containing the visual indicator. The visual indicator is, for example, a crosshair. For example, a green crosshair indicates that the input image was stable and no adjustment was made.

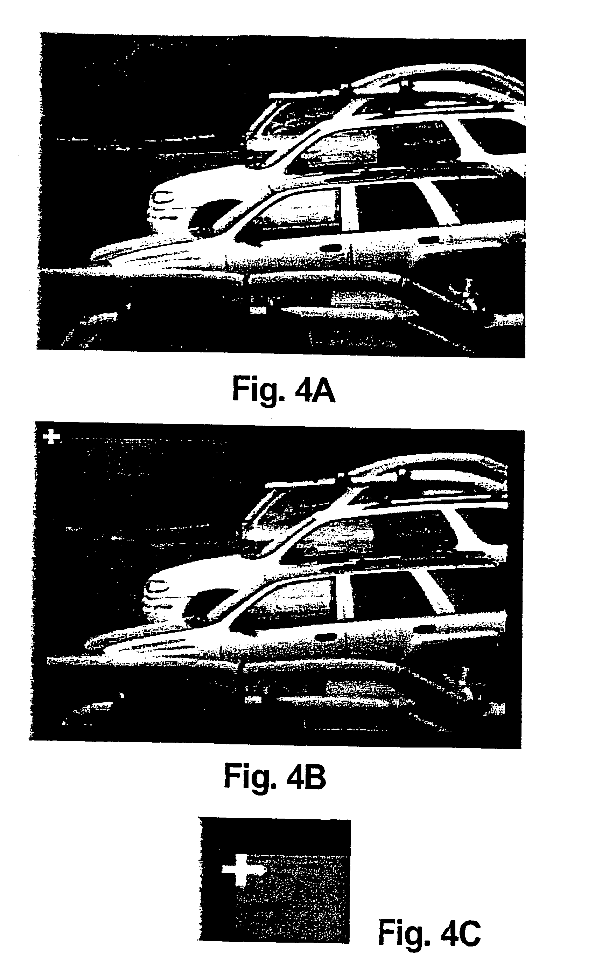

Figs. 4a-4c illustrate a second embodiment of the visual indicator. In this embodiment, due to camera shake, the input image has shifted down slightly and to the right. The shake has also induced some blurring of the image. For example, a yellow crosshair in the adjusted image indicates that the image was translated and its position relative to the nominal position shows that the input image was adjusted up by 1 pixels and left by 4 pixel to accommodate. The adjustment metadata would indicate that the exact adjustment was 1.25 pixels up and 3.75 pixels to the left.

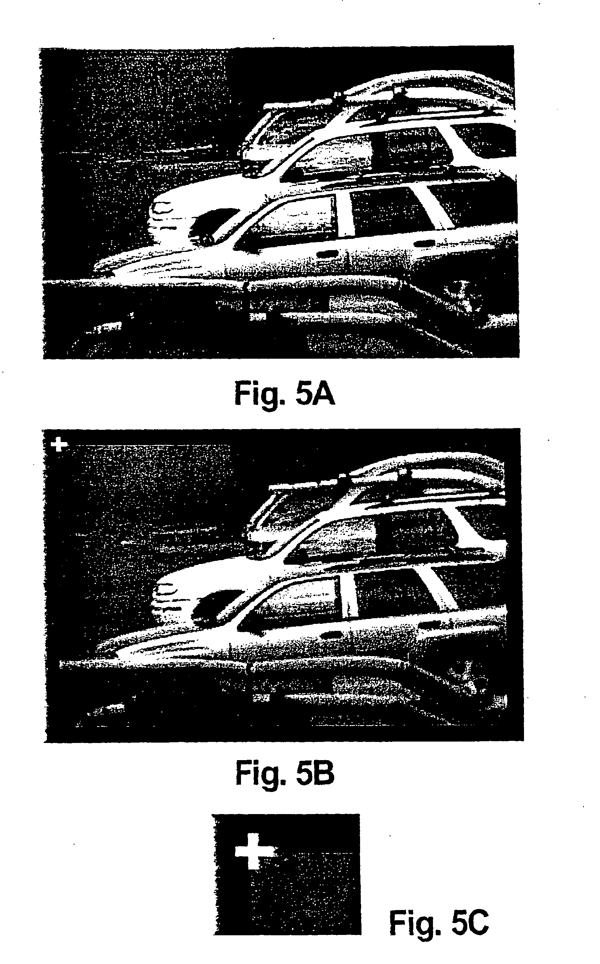

Figs. 5a-5c illustrate a third embodiment of the visual indicator. In this embodiment, the camera has begun to zoom in. The stabilization process determines that applying any translation is not appropriate, which could be indicated by using a red crosshair in the nominal position, and by indicating in the metadata that stabilization was temporarily disabled.

In addition, the present invention is also applicable to the circumstances where the image contains a moving vehicle against an almost featureless background. In this case, the image stabilization process momentarily mistakes the vehicle motion for shake, adjusting the image to keep the vehicle stationary. A crosshair can be used to indicate that the input image was adjusted, while metadata can be used to indicate more exactly the nature of the adjustment. The effect of this erroneous correction is to make it appear that the camera is beginning a pan/tilt motion. However, since the adjustment is recorded and indicated by the visual indicator, this problem can be simply corrected by translating the output image such that the crosshair moves back to the nominal position

The invention has been described herein with reference to particular exemplary embodiments. Certain alterations and modifications may be apparent to those skilled in the art, without departing from the scope of the invention. For example, although the visual indicator has been described relative to the vertical and/or horizontal translation of the image, the visual indicator can also indicate other adjustments made to the image, such as rotation and zooming. Thus, the exemplary embodiments are meant to be illustrative, not limiting of the scope of the invention, which is defined by the appended claims.

## Claims

1. An image processing system (100), comprising:
an image capturing device (110), for capturing a stream of images and generating image data for each image of the stream of captured images;
an image adjusting device (120), that processes the image data corresponding to each image of the captured images and that adjusts at least some of the captured image of the stream based at least upon movement of the image capturing device; and **characterized by**
an image adjustment-recording device (130), that records within a respective attachment to each of the at least some images of the image stream a visual indicator of a type and extent of the adjustment of the captured image, the image adjustment-recording device (120) transmits the attachment within the stream along with and in addition to the adjusted image wherein said visual indicator includes at least a number of pixels that the captured image has been shifted to correct for movement of the image capturing device along with a direction of shift indicating at least one of up, down, right and left.

2. The image processing system (100) of claim 1, wherein the image adjustment device (120) processes the image data to stabilize the captured image by correcting image defects caused by the shake of the image capturing device.

3. The image processing system (100) of claim 1 or claim 2, wherein the image adjustment device (120) applies an affine transformation to the captured images.

4. The image processing system (100) of any of the preceding claims, wherein the image adjustment device (120) adjusts the captured images to implement image sharpening, noise filtering, contrast enhancement, and/or image color correction.

5. The image processing system (100) of any of the preceding claims, wherein the image attachment generated by the image adjustment-recording device (120) comprises a visual indictor associated with the adjusted image and corresponding to the image adjustment.

6. The image processing system (100) of claim 5, further comprising an image output device (140), for outputting and displaying the images adjusted by the image adjusting device (120) and the visual indicator.

7. The image processing system (100) of claim 5 or claim 6, wherein the visual indicator comprises at least one scale indicating the extent of the image adjustment to subpixel accuracy.

8. The image processing system (100) of claim 5 or claim 6, wherein the visual indicator comprises physical characteristics corresponding to the image adjustment, wherein the physical characteristics of the visual indicator preferably comprise colors and/or shapes indicating different image adjustments.

9. The image processing system (100) of any of the preceding claims, wherein the image attachments generated by the image adjustment-recording device comprise metadata associated with the adjusted images and corresponding to the image adjustments, wherein the metadata comprises metadata in the form of an XML text structure.

10. The image processing system (100) of claim 9, wherein the metadata is operable to control the analysis of the adjusted image, or to render a visual indicator.

11. The image processing system (100) of any of the preceding claims, wherein the image attachments generated by the image adjustment-recording device comprise a visual indicator and metadata, both associated with the adjusted image and corresponding to the image.

12. An image processing method (200), comprising the steps of:
an image capturing device (110) capturing (210) a stream of images and generating image data corresponding to each image of the stream of captured images;
processing the image data corresponding to the captured images;
adjusting at least some of the captured images of the stream based at least upon movement of the image capturing device; and **characterized by**
recording (230) a visual indicator of a type and extent of the adjustment to each of the at least some images within a respective attachment to the image within the data stream along with and in addition to the adjusted image wherein said visual indicator includes at least a number of pixels that the captured image has been shifted in the adjusted image to correct for movement of the image capturing device along with a direction of shift indicating at least one of up, down, right and left and indicating the extent of the image adjustments to subpixel accuracy.

13. The image processing method of claim 12, wherein recording the adjustment of the images and generating an image attachments associated with images and corresponding to the adjustment comprises generating a visual indictor associated with the images and corresponding to the image adjustments.

14. The image processing method of claim 12 or claim 13, further comprising outputting and displaying the images adjusted by the image adjusting device and the visual indicator associated with the adjusted image and corresponding to the image adjustments.

15. The image processing method of any of claims 12 to 14, wherein recording the adjustment of the images and generating an image attachments associated with image and corresponding to the adjustment comprises generating metadata associated with the images and corresponding to the image adjustment.

16. The image processing method of claim 15, further comprising utilizing the metadata to render a visual indicator.

17. A computer program product, comprising:
a tangible storage medium readable by a processing circuit and storing instructions for execution by the processing circuit for performing an image processing method as defined in claim 12.

## Patentansprüche

1. Bildverarbeitungssystem (100), umfassend:
eine Bilderfassungsvorrichtung (110) zum Erfassen eines Stroms von Bildern und zum Erzeugen von Bilddaten für jedes Bild des Stroms von erfassten Bildern;
eine Bildjustiervorrichtung (120), die die jedem Bild der erfassten Bilder entsprechenden Bilddaten verarbeitet und die mindestens bestimmte der erfassten Bilder des Stroms mindestens teilweise auf der Basis von Bewegung der Bilderfassungsvorrichtung justiert; und **gekennzeichnet durch**
eine Bildjustierungs-Aufzeichnungsvorrichtung (130), die in einem jeweiligen Anhang an jedem der mindestens bestimmten Bilder des Bildstroms einen visuellen Indikator eines Typs und Ausmaßes der Justierung des erfassten Bildes aufzeichnet, wobei die Bildjustierungs-Aufzeichnungsvorrichtung (120) den Anhang in dem Strom zusammen mit und zusätzlich zu dem justierten Bild überträgt, wobei der visuelle Indikator mindestens eine Anzahl von Pixeln umfasst, um die das erfasste Bild verschoben wurde, um Bewegung der Bilderfassungsvorrichtung zu korrigieren, zusammen mit einer Verschiebungsrichtung, die mindestens eines von nach oben, nach unten, nach rechts und nach links angibt.

2. Bildverarbeitungssystem (100) nach Anspruch 1, wobei die Bildjustierungsvorrichtung (120) die Bilddaten verarbeitet, um das erfasste Bild zu stabilisieren, indem durch das Wackeln der Bilderfassungsvorrichtung verursachte Bilddefekte korrigiert werden.

3. Bildverarbeitungssystem (100) nach Anspruch 1 oder Anspruch 2, wobei die Bildjustierungsvorrichtung (120) eine affine Transformation auf die erfassten Bilder anwendet.

4. Bildverarbeitungssystem (100) nach einem der vorhergehenden Ansprüche, wobei die Bildjustierungsvorrichtung (120) die erfassten Bilder justiert, um Bildverschärfung, Rauschfilterung, Kontrastverbesserung und/oder Bildfarbkorrektur zu implementieren.

5. Bildverarbeitungssystem (100) nach einem der vorhergehenden Ansprüche, wobei der durch die Bildjustierungs-Aufzeichnungsvorrichtung (120) erzeugte Bildanhang einen visuellen Indikator umfasst, der dem justierten Bild zugeordnet ist und der Bildjustierung entspricht.

6. Bildverarbeitungssystem (100) nach Anspruch 5, das ferner eine Bildausgabevorrichtung (140) zum Ausgeben und Anzeigen der durch die Bildjustierungsvorrichtung (120) justierten Bilder und des visuellen Indikators umfasst.

7. Bildverarbeitungssystem (100) nach Anspruch 5 oder Anspruch 6, wobei der visuelle Indikator mindestens eine Skala umfasst, die das Ausmaß der Bildjustierung bis auf Subpixelgenauigkeit angibt.

8. Bildverarbeitungssystem (100) nach Anspruch 5 oder Anspruch 6, wobei der visuelle Indikator physikalische Eigenschaften umfasst, die der Bildjustierung entsprechen, wobei die physikalischen Eigenschaften des visuellen Indikators vorzugweise Farben und/oder Formen, die verschiedene Bildjustierungen angeben, umfassen.

9. Bildverarbeitungssystem (100) nach einem der vorhergehenden Ansprüche, wobei die durch die Bildjustierungs-Aufzeichnungsvorrichtung erzeugten Bildanhänge Metadaten umfassen, die den justierten Bildern zugeordnet sind und den Bildjustierungen entsprechen, wobei die Metadaten Metadaten in Form einer XML-Textstruktur umfassen.

10. Bildverarbeitungssystem (100) nach Anspruch 9, wobei die Metadaten betreibbar sind, um die Analyse des justierten Bildes zu steuern oder um einen visuellen Indikator wiederzugeben.

11. Bildverarbeitungssystem (100) nach einem der vorhergehenden Ansprüche, wobei die durch die Bildjustierungs-Aufzeichnungsvorrichtung erzeugten Bildanhänge einen visuellen Indikator und Metadaten umfassen, die beide dem justierten Bild zugeordnet sind und dem Bild entsprechen.

12. Bildverarbeitungsverfahren (200), das die folgenden Schritte umfasst:
eine Bilderfassungsvorrichtung (110) erfasst (210) einen Strom von Bildern und erzeugt Bilddaten, die jedem Bild des Stroms erfasster Bilder entsprechen;
Verarbeiten der den erfassten Bildern entsprechenden Bilddaten;
Justieren mindestens bestimmter der erfassten Bilder des Stroms mindestens auf der Basis von Bewegung der Bilderfassungsvorrichtung; und **gekennzeichnet durch** Aufzeichnen (230) eines visuellen Indikators eines Typs und Ausmaßes der Justierung an jedem der mindestens bestimmten Bilder in einem jeweiligen Anhang an dem Bild in dem Datenstrom zusammen mit und zusätzlich zu dem justierten Bild, wobei der visuelle Indikator mindestens eine Anzahl von Pixeln umfasst, um die das erfasste Bild in dem justierten Bild verschoben wurde, um Bewegung der Bilderfassungsvorrichtung zu korrigieren, zusammen mit einer Verschiebungsrichtung, die mindestens eines von nach oben, nach unten, nach rechts und nach links angibt und Angeben des Ausmaßes der Bildjustierungen bis auf Subpixelgenauigkeit.

13. Bildverarbeitungsverfahren nach Anspruch 12, wobei das Aufzeichnen der Justierung der Bilder und das Erzeugen von Bildanhängen, die Bildern zugeordnet sind und der Justierung entsprechen, das Erzeugen eines visuellen Indikators umfasst, der den Bildern zugeordnet ist und den Bildjustierungen entspricht.

14. Bildverarbeitungsverfahren nach Anspruch 12 oder Anspruch 13, das ferner das Ausgeben und Anzeigen der durch die Bildjustierungsvorrichtung justierten Bilder und des dem justierten Bild zugeordneten und den Bildjustierungen entsprechenden visuellen Indikators umfasst.

15. Bildverarbeitungsverfahren nach einem der Ansprüche 12 bis 14, wobei das Aufzeichnen der Justierung der Bilder und das Erzeugen von Bildanhängen, die dem Bild zugeordnet sind und der Justierung entsprechen, das Erzeugen von Metadaten umfasst, die den Bildern zugeordnet sind und der Bildjustierung entsprechen.

16. Bildverarbeitungsverfahren nach Anspruch 15, das ferner das Benutzen der Metadaten zum Wiedergeben eines visuellen Indikators umfasst.

17. Computerprogrammprodukt, umfassend:
ein greifbares Speichermedium, das durch eine Verarbeitungsschaltung lesbar ist und Anweisungen zur Ausführung durch die Verarbeitungsschaltung zum Ausführen eines Bildverarbeitungsverfahrens nach Anspruch 12 speichert.

## Revendications

1. Système de traitement d'images (100) comprenant :
un dispositif d'acquisition d'images (110), destiné à acquérir un flux d'images et à générer des données d'images pour chaque image du flux d'images acquises ;
un dispositif d'ajustement d'images (120), qui traite les données d'images correspondant à chaque image des images acquises et qui ajuste au moins certaines des images acquises du flux sur la base d'au moins un mouvement du dispositif d'acquisition d'images ; et
**caractérisé par** :
un dispositif d'ajustement-enregistrement d'images (130), qui enregistre dans une pièce jointe respective de chacune des au moins certaines images du flux d'images, un indicateur visuel d'un type et d'un degré d'ajustement des images acquises, le dispositif d'ajustement-enregistrement d'images (120) transmet la pièce jointe contenue dans le flux en association avec et en plus de l'image ajustée, ledit indicateur visuel contenant au moins un nombre de pixels dont a été décalée l'image acquise pour corriger le mouvement du dispositif d'acquisition d'images en association avec une direction de décalage indiquant au moins l'une des directions haute, basse, droite et gauche.

2. Système de traitement d'images (100) selon la revendication 1, dans lequel le dispositif d'ajustement d'images (120) traite les données d'images pour stabiliser l'image acquise en corrigeant des défauts de l'image provoqués par le tremblement du dispositif d'acquisition d'images.

3. Système de traitement d'images (100) selon la revendication 1 ou la revendication 2, dans lequel le dispositif d'ajustement d'images (120) applique une transformation affine aux images acquises.

4. Système de traitement d'images (100) selon l'une quelconque des revendications précédentes, dans lequel le dispositif d'ajustement d'images (120) ajuste les images acquises pour mettre en oeuvre une augmentation de netteté de l'image, un filtrage de bruit, une augmentation du contraste et/ou une correction de couleur.

5. Système de traitement d'images (100) selon l'une quelconque des revendications précédentes, dans lequel la pièce jointe générée par le dispositif d'ajustement-enregistrement d'images (120) comprend un indicateur visuel associé à l'image et correspondant à l'ajustement d'images.

6. Système de traitement d'images (100) selon la revendication 5, comprenant en outre un dispositif de sortie d'images (140), destiné à fournir en sortie et à afficher les images ajustées par le dispositif d'ajustement d'images (120) et l'indicateur visuel.

7. Système de traitement d'images (100) selon la revendication 5 ou la revendication 6, dans lequel l'indicateur visuel comprend au moins une échelle indiquant le degré d'ajustement de l'image à une précision inférieure au pixel.

8. Système de traitement d'images (100) selon la revendication 5 ou la revendication 6, dans lequel l'indicateur visuel comprend des caractéristiques physiques correspondant à l'ajustement d'images, les caractéristiques physiques de l'indicateur visuel comprenant de préférence des couleurs et/ou des formes indiquant différents ajustements d'images.

9. Système de traitement d'images (100) selon l'une quelconque des revendications précédentes, dans lequel les pièces jointes d'images générées par le dispositif d'ajustement-enregistrement d'images comprennent des métadonnées associées aux images ajustées et correspondant aux ajustements d'images, les métadonnées comprenant des métadonnées sous la forme d'une structure de texte XML.

10. Système de traitement d'images (100) selon la revendication 9, dans lequel les métadonnées ont pour fonction de commander l'analyse de l'image ajustée ou de restituer un indicateur visuel.

11. Système de traitement d'images (100) selon l'une quelconque des revendications précédentes, dans lequel les pièces jointes d'images générées par le dispositif d'ajustement-enregistrement d'images comprennent un indicateur visuel et des métadonnées, dans les deux cas associés à l'image ajustée et correspondant à l'image.

12. Procédé de traitement d'images (200) comprenant les étapes suivantes :
l'acquisition (210) par un dispositif d'acquisition d'images (110) d'un flux d'images et la génération de données d'images correspondant à chaque image du flux d'images acquises ;
le traitement des données d'images correspondant aux images acquises ;
l'ajustement d'au moins certaines des images acquises du flux sur la base d'au moins un mouvement du dispositif d'acquisition d'images ; et **caractérisé par** :
l'enregistrement (230) d'un indicateur visuel d'un type et d'un degré d'ajustement de chacune des au moins certaines images dans une pièce jointe respective à l'image au sein du flux de données en association avec et en plus de l'image ajustée, ledit indicateur visuel comprenant au moins un certain nombre de pixels dont a été décalée l'image acquise dans l'image ajustée pour corriger le mouvement du dispositif d'acquisition d'images en association avec une direction de décalage indiquant au moins l'une d'une direction haute, basse,
droite et gauche et indiquant le degré des ajustements d'images à une précision inférieure au pixel.

13. Procédé de traitement d'images selon la revendication 12, dans lequel l'enregistrement de d'ajustement des images et la génération d'une pièce jointe d'image associée à des images et correspondant à l'ajustement comprend la génération d'un indicateur visuel associé aux images et correspondant aux ajustements d'images.

14. Procédé de traitement d'images selon la revendication 12 ou la revendication 13, comprenant en outre la fourniture en sortie et l'affichage des images ajustées par le dispositif d'ajustement d'images et l'indicateur visuel associé à l'image ajustée et correspondant aux ajustements d'images.

15. Procédé de traitement d'images selon l'une quelconque des revendications 12 à 14, dans lequel l'enregistrement de l'ajustement des images et la génération des pièce jointes d'images associées à des images et correspondant à l'ajustement comprend la génération de métadonnées associées aux images et correspondant à l'ajustement d'images.

16. Procédé de traitement d'images selon la revendication 15, comprenant en outre l'utilisation des métadonnées pour restituer un indicateur visuel.

17. Produit de programme informatique, comprenant :
un support de stockage tangible lisible par un circuit de traitement et stockant des instructions destinées à être exécutées par un circuit de traitement pour mettre en oeuvre un procédé de traitement d'images selon la revendication 12.
